# EUROPEAN PATENT APPLICATION

(11) **EP 2 194 469 A2**
(43) Date of publication of application: **09.06.2010**
(21) Application number: 09172509.3
(22) Date of filing: 08.10.2009
(51) Int. Cl.: G06F 17/30

(54) **Apparatus of providing digital contents with external storage device and metadata, and method thereof**

(30) Priority: 01.12.2008 KR 20080120403
(71) Applicant: Electronics and Telecommunications Research Institute, Daejeon-city 305-350 (KR)
(72) Inventor: Ma, Jinsuk, 305-313, Daejeon-city (KR); Kim, Sunja, 305-755, Daejeon-city (KR); Ham, Hosang, 305-755, Daejeon-city (KR); Kim, Chaekyu, 305-707, Daejeon-city (KR)
(74) Representative: Betten & Resch

(57) **Abstract**

An apparatus for providing digital contents includes a device recognition unit that recognizes an external storage device; a contents searching unit that searches a contents file stored in the external storage device; a representative screen extracting unit that determines whether or not a representative screen can be extracted by checking the contents file and extracts the representative screen from the contents file when the representative screen can be extracted; and a metadata creating unit that creates metadata including one or more information among a contents name, a service type, a reproduction time, a resolution, a library required in reproduction, a thread, a distribution condition, a producer, a file name of the representative screen, and a selling price for the contents file.

## Description

### RELATED APPLICATIONS

The present application claims priority to Korean Patent Application Serial Number 10-2008-0120403, filed on Dec. 1, 2008, the entirety of which is hereby incorporated by reference.

### BACKGROUND OF THE INVENTION

### 1. Field of the Invention

The present invention relates to an apparatus for providing digital contents, which receives contents from an external storage device and a method thereof. More particularly, the present invention relates to an apparatus for providing digital contents, which converts and store contents according to a specification required at the time of receiving contents from an external storage device, and generating and selling metadata for the corresponding contents, and a method thereof.

### 2. Description of the Related Art

Currently, mobile telephone, which represents a personal mobile communication device, has various additional functions in various types. In addition, the mobile telephone already includes a high pixel camera phone, a digital multimedia broadcasting (DMB) receiving function, etc. In particular, the mobile telephone already has a file viewer or a text viewer that is included in an existing smart phone, etc. In addition, the mobile phone, which has functions such as a moving picture player, an MP3 player, etc., is the already widely used representative mobile terminal. Further, recently, a portable multimedia player (PMP) has a high speed downlink packet access (HSDPA) modem or a wireless communication device such as a wireless LAN device and an Internet browse as software in addition to the existing moving picture and music reproduction, text viewer, navigation functions in order to wirelessly access the internet. The iPod touch phone, which has recently been introduced by Apple Co., also has various functions such as the moving picture and music reproducing functions, a slide show function, etc. and provides a function of purchasing digital contents online by accessing the Internet with its own wireless LAN function .

Meanwhile, the various mobile terminals described above have been subjected to various technical evolving processes and rapidly expanded to the public. According to this tendency, apparatuses for providing digital contents which can provide or sell various multimedia contents such as movies, dramas, music videos, e-books, etc., that are currently being sold online to the mobile terminal offline have been developed.

The apparatus for providing digital contents described above can be installed inside or outside a room where there are a plurality of users and receives the corresponding digital contents from a central server using a pre-stored wired data network according to a request of a user and transmits them to the mobile terminal. As a result, the apparatus for providing digital contents is an apparatus for charging a fee. The apparatus for providing digital contents provides contents data to the user's mobile terminal without separately paying a fee for a packet. As a result, a user can be conveniently provided with the digital contents at a desired location at a lower price than a case where the user is provided with the digital contents through wireless Internet services of existing mobile operators.

A process of purchasing contents when the user purchases the contents in the apparatus for providing contents will be described below. First, the user must input information (for example, model name) on a mobile terminal which the user possesses. The reason is that there are various kinds of user's terminal for each user as described above . Further, this is to convert the contents selected by the user to meet the requirement of the mobile terminal of the user and provide them. For example, in the case of a mobile telephone, an LCD screen can have various solutions such as 800*600, 640*480, 320*240, etc. according to a maker or a model.

In order to smoothly reproduce the contents downloaded from the apparatus for providing contents in the user mobile terminal, the downloaded contents should undergo a conversion process such as transcoding, etc. to meet each terminal requirement. If the downloaded contents do not undergo are not subjected to the process, fatal problems occur in that the mobile terminal of the user is reset or the system is down, by the downloaded contents. The transcoding technology actually used to convert the contents is very technologically complicated due to various input parameters, a use of a wide moving picture codec, a digital right management (DRM) technology, etc.

Therefore, the apparatus for providing contents should know the terminal information (for example, model name) on the user terminal beforehand in order to correspond to the mobile terminal of the user having different hardware and software specifications. At this time, assume that the hardware and software specifications corresponding to the model name of the user terminal are previously determined.

Meanwhile, recently introduced mobile terminals have been widely used for the purpose of an entertainment for giving a personal pleasure and a study for reparation or review while seeing lecture contents of a school, an academy, etc. Moving picture contents self-produced for an examination, a certificate of qualification, learning foreign languages in an academy street have been generally and already stored and sold in storage media such as a CD, a DVD, a USB, etc .

### SUMMARY OF THE INVENTION

An object of the present invention is to allow a person who sells contents through an apparatus for providing digital contents to easily upload his/her own contents stored in an external storage device onto the apparatus for providing digital contents. That is, the object of the present invention is to easily upload the contents stored in the external storage device onto the apparatus for providing digital contents when the external storage device storing the contents is connected to the digital contents by creating meta data for the corresponding contents and converting and storing the contents according to a specification required in selling the contents.

An apparatus for providing digital contents includes: a device recognition unit that recognizes an external storage device; a contents searching unit that searches a contents file stored in the external storage device; a representative screen extracting unit that determines whether or not a representative screen can be extracted by checking the contents file and extracts the representative screen from the contents file when the representative screen can be extracted; and a metadata creating unit that creates metadata including one or more information among a contents name, a service type, a reproduction time, a resolution, a library required in reproduction, a thread, a distribution condition, a producer, a file name of the representative screen, and a selling price for the contents file.

The metadata creating unit requests metadata for the contents file to a central server by using identification information of the contents file and receives the metadata for the contents file from the central server.

The metadata creating unit receives the identification information of the contents file from a user.

The metadata creating unit requests input of information required to create the metadata to the user and creates the metadata by receiving the resultant information.

The representative screen extracting unit extracts a plurality of representative screens and sets one of the plurality of representative screens as the representative screen for the contents file by receiving user selection when the contents file is a moving picture.

The apparatus for providing digital contents further includes: a contents converting unit that converts the contents file to a predetermined format; and a contents storage unit that stores the contents file converted in the contents converting unit.

The device recognition unit checks a security key stored in the external storage device in order to verify whether or not the external storage device is an effective external storage device.

A method for receiving contents from an external storage device in an apparatus for providing digital contents includes: recognizing a connected external storage device; searching a contents file stored in the external storage device; determining whether or not a representative screen can be extracted by checking the searched contents file; extracting and storing the representative screen from the contents file when the representative screen can be extracted; and creating and storing metadata for the contents file.

The metadata includes one or more information among a contents name, a service type, a reproduction time, a resolution, a library required in reproduction, a thread, a distribution condition, a producer, a file name of the representative screen, and a selling price.

Creating and storing the metadata for the contents file includes: requesting the metadata for the contents file to a central server by using identification information of the contents file; and receiving the metadata for the contents file from the central server.

In requesting the metadata for the contents file to the central server by using the identification information of the contents file, the identification information of the contents file is inputted from a user.

In extracting and storing the representative screen from the contents file, a plurality of representative screens are extracted and one of the plurality of representative screens is set as the representative screen for the contents file by receiving user selection when the contents file is a moving picture.

The method for receiving contents from an external storage device in an apparatus for providing digital contents further includes converting the contents file to a predetermined format.

In recognizing the connected external storage device, a security key stored in the external storage device is checked in order to verify whether or not the external storage device is an effective external storage device.

The following effects can be obtained by the present invention.

A person who wants to sell contents through an apparatus for providing digital contents can easily upload his/her contents stored in an external storage device onto the apparatus for providing digital contents. Therefore, people in addition to sellers who manage the apparatus for providing digital contents can also unload their own various contents onto the apparatus for providing digital contents according to the present invention and purchasers can receive various digital contents through offline. Further, there is provided an effective method capable of selling provider's own contents by using an apparatus for providing contents in a school, an academy, a training school, a public institution, etc. by using the present invention.

### BRIEF DESCRIPTION OF THE DRAWINGS

FIG. 1 is a schematic diagram of an apparatus for providing digital contents, which receives contents from an external storage device according to an embodiment of the present invention;
FIG. 2 is a diagram for explaining in detail of a configuration and a function of an apparatus for providing digital contents according to an embodiment of the present invention;
FIG. 3 is a diagram illustrating an example of a metadata structure adopted in the present invention; and
FIG. 4 is a diagram for illustrating a process in which an apparatus for providing digital contents converts and stores contents according to a specification required in selling the contents by creating metadata for contents files stored in an external storage device according to an embodiment of the present invention.

### DETAILED DESCRIPTION OF THE PREFERRED EMBODIMENTS

The present invention will be described below with reference to the accompanying drawings. Herein, the detailed description of a related known function or configuration that may make the purpose of the present invention unnecessarily ambiguous in describing the present invention will be omitted. Exemplary embodiments of the present invention are provided so that those skilled in the art may more completely understand the present invention. Accordingly, the shape, the size, etc., of elements in the figures may be exaggerated for explicit comprehension.

Hereinafter, preferred embodiments of the present invention will be described in detail with reference to the accompanying drawings.

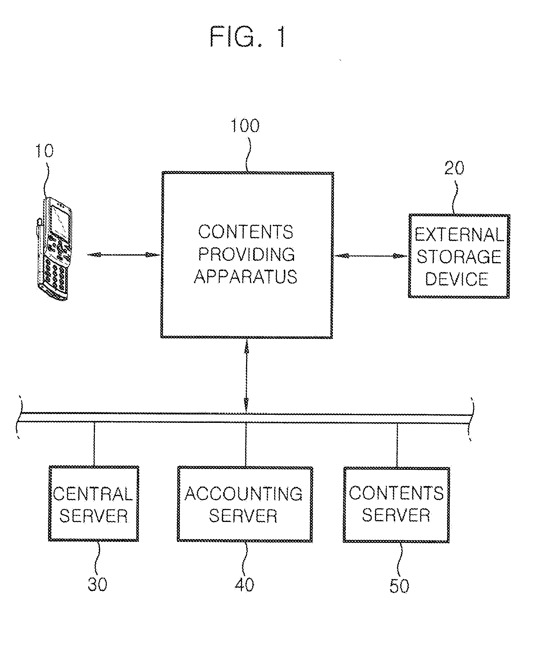

FIG. 1 is a schematic diagram of an apparatus for providing digital contents (hereinafter, referred to as 'contents providing apparatus'), which receives contents from an external storage device according to an embodiment of the present invention.

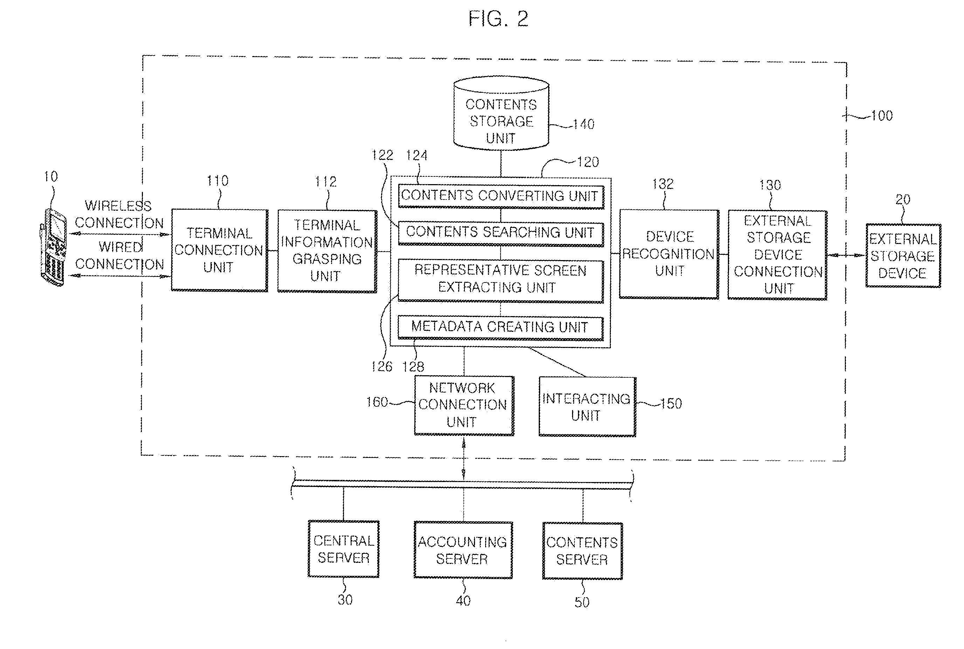

First, referring to FIG. 1, when the contents providing apparatus 100 according to the embodiment of the present invention is connected to an external storage device 20, the contents providing apparatus 100 recognizes the external storage device and searches stored contents files. The content providing apparatus 100 creates metadata for each of the searched content files, and converts and stores contents according to a specification required in selling the contents. The contents providing apparatus 100 provides the converted contents to a user terminal 100 according to the request from a user. The contents providing apparatus 100 will be described below in detail with reference to FIG. 2.

The external storage device 20 stores contents to be uploaded onto the contents providing apparatus 100. The external storage device 20 may be an external hard rack, an external hard, a hard disk, a USB storage device, an IEEE1394 storage device, a CD/DVD, a blue-ray disk, etc.

In addition, a central server 30 is connected to the content providing apparatus 100 according to the embodiment of the present invention to store customer management information, such as information on a user terminal that downloads contents, contents purchasing history, interested contents, etc. and manage the entire statistics of used contents. Further, the central server 30 manages the contents history updated in the contents providing apparatus 100, the type and capacity of contents that are currently stored, etc., and stores and manages metadata for various contents files. Herein, the metadata for the contents files stored and manages by the central server 30 may include a content same, a library required for reproduction, a thread, a distribution condition, a producer, a representative screen, a selling price, etc. In addition, the central server 30 controls and manages components of the contents providing apparatus 100.

An accounting server 40 is a unit that charges a fee for contents purchased by the user and charges a fee through the existing used various method, such as cash, card, E-money, mobile phone payment, etc.

A contents server 50 transmits various multimedia contents to the contents providing apparatus 100 online and the contents providing apparatus 100 receives the multimedia Contents from the contents server 50 and updates Contents stored in a contents storage unit.

FIG. 2 is a diagram for explaining in detail of a configuration and a function of an apparatus for providing digital contents according to an embodiment of the present invention.

The contents providing apparatus 100 according to the embodiment of the present invention includes a terminal connection unit 110, a terminal information grasping unit 112, a control unit 120, an external storage device connection unit 130, a device recognition unit 132, a contents storage unit 140, an interacting unit 150, and a network connection unit. 160.

Referring to FIG. 2, the terminal connection unit 110 is connected to a serial communication port, an USB port, a Bluetooth communication module, etc., which are included in the user terminal 10, by wired or wireless, such that it can transmit contents requested by the user to the user terminal 10 and communicate the contents providing apparatus 100 with the user terminal 10.

The terminal information grasping unit 112 requests information on the specification of the user terminal 10 that will reproduce or execute contents to grasp the information on the terminal. At this time, assuming that the specification of the user terminal 10 is previously input in the user terminal 10, a specification information transmitting button built in the user terminal 10 is pressed, thereby making it possible to exchange a message including the information on the apparatus 100a for providing contents according to the embodiment of the present invention and the user terminal 10. A method for exchanging a message can use known various wireless transmission technologies, such as infrared communication, wireless transmission, etc.

Alternatively, the user terminal 10 is connected to means such as a cable provided in the contents providing apparatus 100 according to the embodiment of the present invention and the terminal information grasping unit 112 is connected to the user terminal 10 through the cable to acquire the information on the user terminal 10. The user desired contents may be transmitted from the contents providing apparatus 100 to the user terminal 10 through the cable for connection.

As another method, the terminal information grasping unit 112 allows the user to directly input the specification of the user terminal 10 through a user interface provided by the interacting unit 150.

The terminal information acquired by the foregoing description includes an image compression format supported by the user terminal 10, a spare storage space size of the user terminal 10, screen information on the user terminal 10, a type of a document supported by the user terminal 10, a moving picture compression format supported by the user terminal 10, a main memory size of the user terminal 10, CPU information on the user terminal 10, platform and library version information mounted in the user terminal 10, and a type of libraries included in the user terminal 10. One of the examples is information represented in Table 1.

**[Table 1]**

| PMS Device Specification | Specification Example |
|---|---|
| PMS Maker | XX Electron |
| PMS Model Name | PMS-100 |
| Screen Size | 4 inches |
| Screen Resolution | 480* 640 |
| Color Resolution | 65,536 Color |
| CPU Specification | Intel PXA270 |
| Built-in Memory Size | 128MB |
| External Memory Size | 1GB |
| Usable Wireless Transmission Scheme | Bluetooth v1.2, WiFi 802.11a/b/g |
| Maximum Reproducible FPS (frame per second) | 30 |
| Usable Memory Size | 100MB |
| Platform version | WIPI 2.0 |
| Platform Library Version | SKTlbs1.0; SKTopenGL1.1 |
| Support Multimedia | MPEG4, H.263, MJPEG, MP3, JPEG, PNG, PDF, HTML, TXT |

The external storage device connection unit 130 allows the external storage device 20 to access the contents providing apparatus 100 according to the embodiment of the present invention to update the contents. The external storage device connection unit 130 may be an external hard rack connection device, an external hard connection device, a hard disk connection device, a USB storage device, an IEEE1394 storage device connection device, a CD/DVD drive, a blue-ray drive, etc.

When the external storage device 20 is connected to the external storage device connection unit 130, the device recognition unit 132 detects this connection to connect a system drive system of the contents providing apparatus 100 according to the embodiment of the present invention. This can be implemented by using a function of an operating system used in the contents providing apparatus 100 according to the embodiment of the present invention. Moreover, the device recognition unit 132 may check a security key stored in the external storage device 20 in order to verify whether or not the external storage device 20 is an effective external storage device 20.

The contents storage unit 140 stores various multimedia contents. The contents stored in the contents storage unit 140 may be an original contents file and contents file converted into various forms to meet the various user terminals. The contents storage unit 140 receives a contents file converted in a contents converting unit 124 of the control unit 120 to be described below, and stores metadata for contents files and a representative screen which are created in a metadata creating unit 128 and a representative screen extracting unit 126 of the control unit 120, respectively, at the same time. For example, a contents storage unit 320 may store moving pictures, images, MP3 files, documents, etc.

The network connection unit 160 connects the contents providing apparatus 100 according to the embodiment of the present invention to the central server 30, the counting server 40, and the contents server 50 to communicate them each other.

The control unit 120 controls each unit to implement the present invention. More specifically, the control unit 120 determines whether or not the contents selected (requested) by the user are stored in the contents storage unit 140. As the determination result, when the contents selected by the user are stored in the contents storage unit 140, the control unit 120 converts the contents selected by the user through a content converting unit 124 and provides them to the user terminal 10. As the determination result, when the contents selected by the user are not stored in the contents storage unit 140, the control unit 120 requests original contents to the contents server 50 and stores the contents storage unit 140 by receiving the original contents through the network connection unit 160. In addition, the contents are converted to meet the requirement of the user terminal 10 through the contents converting unit 124 and provided to the user terminal 10.

Meanwhile, the control unit 120 includes the contents converting unit 124, a content searching unit 122, a representative screen extracting unit 126, and a metadata creating unit 128. Although FIG. 2 shows a configuration that the contents converting unit 124, the contents searching unit 122, the representative screen extracting unit 126, and the metadata creating unit 128 are included in the control unit 120, each unit may be implemented to be separated from the control unit 120.

The contents converting unit 124 extracts the contents file selected by the user from the contents storage unit 140, converts them to meet a type of the user terminal, and provides them to the user terminal 10.

Further, the contents converting unit 124 converts a new contents file stored in the external storage device 20 to meet the type of the user terminal (that is, a specification required in selling the contents) and stores it in the contents storage unit 140.

More specifically, the contents converting unit 124 includes an image converter (not shown), a document converter (not shown), and a moving picture converter (not shown) and a compiler/linker (not shown) for converting application programs operated in the user terminal.

The image converter receives information, such as the image compression format supported by the user terminal 10, the spare storage space size of the user terminal, the screen information of the user terminal, etc. and uses it, such that it converts the images stored in the contents storage unit 140 into a form optimized for the user terminal.

The document converter receives a type of documents supported by the user terminal 10, the spare storage space size of the user terminal, the screen information of the user terminal, etc. and uses them, such twat it converts the documents stored in the contents storage unit 140 into a form optimized for the user terminal.

The moving picture converter receives the moving picture compression format supported by the user terminal 10, a spare storage space size of the user terminal, screen information of the user terminal, the main memory size of the user terminal, the CPU information etc. and uses them, such that it converts the moving pictures stored in the contents storage unit 140 into a form optimized for the user terminal.

The compiler/linker receives the platform and library version information mounted in the user terminal 10, a type of mounted libraries, a mail memory size of the user terminal, the CPU information, the screen information of the user terminal, etc. and uses them, such that it performs an operation of building the contents stored in the contents storage unit 140 again.

The contents searching unit 122 searches the contents file stored in the external storage device 20. Further, the contents searching unit 122 manages the contents stored in the contents storage unit 140 by using a content table for managing information on the contents stored in the contents storage unit 140.

The contents searching unit 122 searches whether or not a new contents file is present by comparing the contents files stored in the contents storage unit 140 with the contents file stored in the external storage device 20 by using the content table. As the search result, only a new contents file that is not stored in the contents storage unit 140 is converted through the contents converting unit 124.

The representative screen extracting unit 126 determines whether or not the representative screen is extracted by grasping the type of the contents file searched through the contents searching unit 122 and extracts the representative screen (for example, screen shot) from the corresponding contents file when the representative screen can be extracted. At this time, files which can extract the representative screen among the contents files may include MPEG4, AVI, JPEG, etc. For example, the representative screen extracting unit 126 extracts the representative screen at a predetermined sampling time interval when the contents file is the moving picture. When the representative screen extracting unit 126 extracts a plurality of representative screens for the contents file, the representative screen extracting unit 126 requests user selection to the user through the unit 150 and sets one representative screen as a representative screen for the corresponding contents file by receiving the user selection according to the request. The representative screen, as an image displayed to the user in order to acquire substantial information on contents which the user wants to purchase in purchasing the contents, may be stored in general bitmap image formats (i.e., BMP, PNG, JPEG, etc.).

As described above, complicated processes of creating a representative screen for each contents file in order to upload the known contents and set the representative screen for the contents file one by one can be minimized. Accordingly, according to the embodiment of the present invention, a person who wants to sell the contents can easily upload his/her own contents possessed in the external storage device 20. Further, people in addition to sellers who manage the contents providing apparatus can also easily upload their own various contents onto the contents providing apparatus 100 according to the embodiment of the present invention.

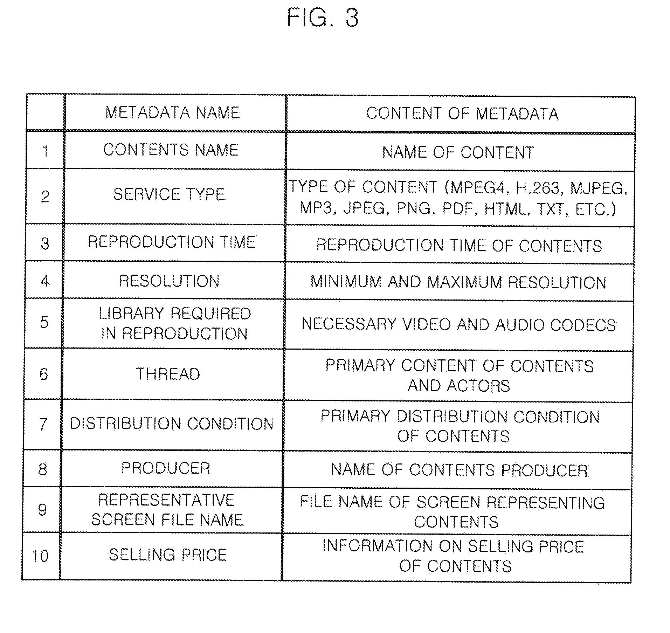

The metadata creating unit 128 creates metadata for each of the contents files searched through the contents searching unit 122. FIG. 3 is a diagram illustrating an example of a structure of metadata created through the metadata creating unit 128. The metadata includes a content name, a service type, a reproduction time, a resolution, a library required for reproduction, a thread, a distribution condition, a producer, a representative screen file name, a selling price, etc.

The metadata creating unit 128 may create metadata for each of one or more contents files stored in the external storage device 20 through various methods.

First, when identification information (for example, tag information) of the contents file stored in the external storage device 20 the metadata creating unit 128 is included in the metadata creating unit 128, the metadata creating unit 128 transmits the identification of the contents file to the central server 30 through the network connection unit 160 and the central server e30 extracts metadata of the contents file having corresponding identification information. In addition, the extracted metadata is transmitted to the metadata creating unit 128. The metadata creating unit 128 creates the metadata having a structure of FIG. 3 by using the metadata transmitter from the central server. At this time, it is preferable to additionally modify omitted or contents omitted or wrong contents through user input. The metadata creating unit 128 may receive the identification information of the contents file from the user.

Meanwhile, in order to achieve the above-mentioned configuration, the central server 30 stores and manages metadata for various contents files.

As another method, the metadata creating unit 128 requests input of desired information to the user through the interacting unit 150 in order to configure the metadata and receives the resultant information from the user to create the metadata shown in FIG. 3.

Meanwhile, when information required to create the metadata is included in the contents file such as an ID3 tag of an MP3 file, the metadata creating unit 128 may create the metadata by using the desired information.

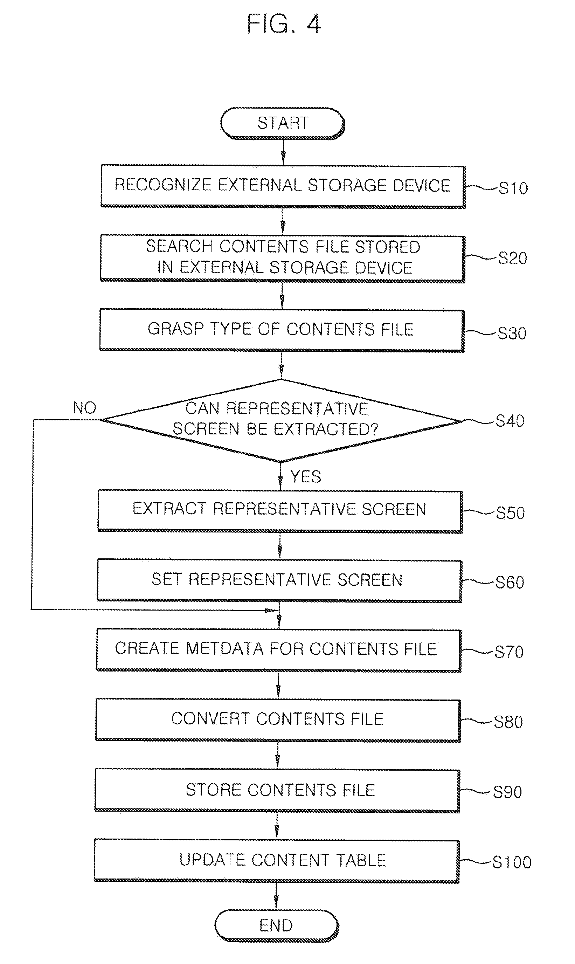

FIG. 4 is a diagram for illustrating a process in which an apparatus for providing digital contents converts and stores contents according to a specification required in selling the contents by creating metadata for contents files stored in an external storage device according to an embodiment of the present invention.

First, when the external storage device is connected to the contents providing apparatus according to the embodiment of the present invention, the contents providing apparatus detects this connection and recognizes the external storage device (S10). At this time, the contents providing apparatus may check a security key stored in the external storage device whether or not the external storage device is an effective storage device.

Next, the contents file stored in the external storage device3 is searched (S20). At the time of searching contents in step S20, stored contents are searched by using a content table for managing information on the stored contents.

It is determined whether or not a representative screen can be extracted by grasping a type of the contents file searched in step S20 (S40). At this time, files which can extracts the representative screen may include MPEG4, AVI, JPEG, etc.

When the representative screen can be extracted, the representative screen (for example, screen shot) is extracted from the corresponding contents file (S50). For example, when the contents file is a moving picture, the representative screen is extracted at a predetermined sampling time interval. When a plurality of representative screens for the contents file are extracted, user selection is requested to a user and the resultant use selection is received, such that one representative screen is set as the representative screen for the corresponding contents file (S60). Herein, the representative screen, as an image displayed to the user in order to acquire substantial information on contents which the user wants to purchase in purchasing the contents, may be stored in a general bitmap image format.

Next, metadata for each of the contents files searched in step S20 is created (870). The metadata includes a content name, a service type, a reproduction time, a resolution, a library required for reproduction, a thread, a distribution condition, a producer, a representative screen file name, a selling price, etc.

In step S70, the metadata for each contents file can be created through various methods. First, when identification information (for example, tag information) is stored in the contents file stored in the external storage device the identification of the contents file is transmitted to a central server and the metadata of the contents file having the corresponding identification information is received from the central server, such that the metadata having a structure shown in FIG. 3 is created. At this time, omitted or wrong contents may be additionally modified through user input.

As another method, input of desired information is requested to the user and the resultant information is received from the user, such that the metadata having the structure of FIG. 3 may be created.

Further, when information required to create the metadata is includes in the contents file such as an ID3 tag of an MP3 file, the metadata may be created by using the desired information.

Next, it is determined whether or not an external file is a new contents file by comparing the external file with the stored contents files. As the determination result, when the external file is the new unstored contents file, the contents file is converted (S80). The contents file converted in step S80 is stored with the metadata (S90) and the content table is finally updated, such that the process is terminated (S100).

As described above, complicated processes of creating a representative screen for each contents file in order to upload the known contents and set the representative screen for the contents file one by one can be minimized. Further, since the metadata for each contents file to be uploaded onto the contents providing apparatus is easily created and the contents are stored while being converted according to the specification required in selling the contents, a service provider that operates the contents providing apparatus can conveniently upload its acquired contents in a school, an academy, a training school, etc. In addition, people can also easily upload their own various contents.

Some steps of the present invention can be implemented as a computer-readable code in a computer-readable recording medium. The computer-readable recording media includes all types of recording apparatuses in which data readable by a computer system is stored. Examples of computer-readable recording media include a ROM, a RAM, a CD-ROM, a CD-RW, a magnetic tape, a floppy disk, an HDD, an optical disk, an optical magnetic storage device, etc. and in addition, include a recording medium implemented in the form of a carrier wave (for example, transmission through the Internet). Further, the computer-readable recording media are distributed on computer systems connected through the network, and thus the computer-readable recording media may be stored and executed as the computer-readable code by a distribution scheme.

As described above, the preferred embodiments have been described and illustrated in the drawings and the description. Herein, specific terms have been used, but are just used for the purpose of describing the present invention and are not used for defining the meaning or limiting the scope of the present invention, which is disclosed in the appended claims. Therefore, it will be appreciated to those skilled in the art that various modifications can be made and other equivalent embodiments are available within the scope of the appended claims.

## Claims

1. An apparatus for providing digital contents, comprising:
a device recognition unit that recognizes an external storage device;
a contents searching unit that searches a contents file stored in the external storage device;
a representative screen extracting unit that determines whether or not a representative screen can be extracted by checking the contents file and extracts the representative screen from the contents file when the representative screen can be extracted; and
a metadata creating unit that creates metadata including one or more information among a contents name, a service type, a reproduction time, a resolution, a library required in reproduction, a thread, a distribution condition, a producer, a file name of the representative screen, and a selling price for the contents file.

2. The apparatus for providing digital contents according to claim 1, wherein the metadata creating unit requests metadata for the contents file to a central server by using identification information of the contents file and receives the metadata for the contents file from the central server.

3. The apparatus for providing digital contents according to claim 2, wherein the metadata creating unit receives the identification information of the contents file from a user.

4. The apparatus for providing digital contents according to any one of claims 1 to 3, wherein the metadata creating unit requests input of information required to create tne metadata to the user and creates the metadata by receiving the resultant information.

5. The apparatus for providing digital contents according to any one of claims 1 to 4, wherein the representative screen extracting unit extracts a plurality of representative screens and sets one of the plurality of representative screens as the representative screen for the contents file by receiving user selection when the contents file is a moving picture.

6. The apparatus for providing digital contents according to any one of claims 1 to 5, further comprising:
a consents converting unit that converts the contents file to a predetermined format; and
a contents storage unit that stores the contents file converted in the contents converting unit.

7. The apparatus for providing digital contents according to any one of claims 1 to 6, wherein the device recognition unit checks a security key stored in the external storage device in order to verify whether or not the external storage device is an effective external storage device.

8. A method for receiving contents from an external storage device in an apparatus for providing digital contents, comprising:
recognizing a connected external storage device;
searching a contents file stored in the external storage device;
determining whether or not a representative screen can be extracted by checking the searched contents file;
extracting and storing the representative screen from the contents file when the representative screen can be extracted; and
creating and storing metadata for the contents file.

9. The method for receiving contents according to claim 8, wherein the metadata includes one or more information among a contents name, a service type, a reproduction time, a resolution, a library required in reproduction, a thread, a distribution condition, a producer, a file name of the representative screen, and a selling price.

10. The method for receiving contents according to claim 8 or 9, wherein creating and storing the metadata for the contents file includes:
requesting the metadata for the contents file to a central server by using identification information of the contents file; and
receiving the metadata for the contents file from the central server.

11. The method for receiving contents according to claim 10, wherein in requesting the metadata for the contents file to the central server by using the identification information of the contents file, the identification information of the contents file is inputted from a user.

12. The method for receiving contents according to any one of claims 8 to 11, wherein in extracting and storing the representative screen from the contents file, a plurality of representative screens are extracted and one of the plurality of representative screens is set as the representative screen for the contents file by receiving user selection when the contents file is a moving picture.

13. The method for providing contents according to any one of claims 8 to 12, further comprising:
converting the contents file to a predetermined format.

14. The method for receiving contents according to any one of claims 8 to 13, wherein in recognizing the connected external storage device, a security key stored in the external storage device is checked in order to verify whether or not the external storage device is an effective external storage device.
